# EUROPÄISCHE PATENTANMELDUNG

(11) **EP 3 115 093 A1**
(43) Veröffentlichungstag der Anmeldung: **11.01.2017**
(21) Anmeldenummer: 16177275.1
(22) Anmeldetag: 30.06.2016
(51) Int. Cl.: A63F 13/65

(54) **SPIELANORDNUNG UND VERFAHREN ZUR VERARBEITUNG EINES SIGNALS WÄHREND EINES SPIELS**

(30) Priorität: 08.07.2015 DE 102015212759
(71) Anmelder: Mösl, Thomas, 68526 Ladenburg (DE); Göckel, Florian, 64354 Reinheim (DE)
(72) Erfinder: Mösl, Thomas, 68526 Ladenburg (DE)
(74) Vertreter: Patent- und Rechtsanwälte Ullrich & Naumann

(57) **Zusammenfassung**

Im Hinblick auf ein besonders variantenreiches und abwechslungsreiches Spielerlebnis für einen Spieler ist eine Spielanordnung mit einem vorzugsweise abgegrenzten Spielbereich (1) für einen oder mehrere Spieler (2), mit einem von einem Spieler (2) während eines Spiels im Spielbereich (1) mit sich zu führenden oder zu tragenden Sensor (3) für akustische und/oder optische und/oder elektromagnetische Signale und mit einer dem Spieler (2) zugeordneten Anzeige (4) bereitgestellt, wobei die Anzeige (4) als Reaktion auf ein von dem Sensor (3) empfangenes definierbares Signal (5) zur Einblendung von Information in das Sichtfeld des Spielers (2) in vorgebbarer Weise aktivierbar ist. Des Weiteren ist ein entsprechendes Verfahren zur Verarbeitung eines Signals (5) während eines Spiels, insbesondere mit einer wie oben erläuterten Spielanordnung, angegeben.

## Beschreibung

Die vorliegende Erfindung betrifft eine Spielanordnung mit einem vorzugsweise abgegrenzten Spielbereich für einen oder mehrere Spieler.

Des Weiteren betrifft die vorliegende Erfindung ein Verfahren zur Verarbeitung eines Signal während eines Spiels mit einem vorzugsweise abgegrenzten Spielbereich für einen oder mehrere Spieler.

Spielanordnungen sowie Verfahren zur Verarbeitung eines Signals während eines Spiels der eingangs genannten Art sind aus der Praxis bekannt und existieren in unterschiedlichen Ausführungsformen. Beispielsweise ist ein Lasertag genanntes Laserspiel bekannt, bei dem sich einer oder mehrere Spieler in einem Spielbereich bewegen. Bei einem derartigen Spiel versuchen Spieler, verschiedene Aufgaben auf einem speziellen Parcours oder in mehreren Räumen zu erfüllen. Generell ist das Spielprinzip vergleichbar mit Räuber und Gendarm. Als Hilfsmittel stehen dabei ungefährliche pistolenähnliche Infrarotsignalgeber zur Verfügung, mit denen ein Schusswechsel simuliert werden kann. Dabei trägt jeder Spieler einen Sensor in Form einer Weste an seinem Körper. Wird ein derartiger Sensor von einem Infrarotstrahl getroffen, wertet ein Computer diesen Treffer aus und der Spieler kann mit Punktabzug, Ausscheiden oder temporärer Deaktivierung seiner Weste bestraft werden. Dabei sind Westen bekannt, die auf einer Vorderseite und/oder einer Rückseite ein am Bauch und/oder Rücken des Spielers zu tragendes Display aufweisen. Auf einer derartigen Anzeige in Form des Displays können Spielerinformationen und aktuelle Punktzahlen durch den Computer aktualisiert dargestellt werden.

Üblicherweise wird Lasertag in einem abgegrenzten Spielbereich wie beispielsweise in einer Arena gespielt. Diese Arena wird typischerweise durch Wände und ähnliches als eine Art Labyrinth ausgebildet, um unterschiedliche Spielsituationen zu schaffen. In diesem Labyrinth bewegen sich die Lasertagspieler und versuchen andere Spieler zu markieren oder zu treffen. Derartige Arenen können auf unterschiedliche Weise ausgestaltet werden, um interessante und erlebnisreiche Situationen bereitzustellen. Hierbei können unterschiedliche Geländesituationen geschaffen werden, die mittels moderner Beleuchtungstechnik weiter ausgestaltet und individualisiert werden können.

Bei der bekannten Spielanordnung und dem bekannten Verfahren zur Verarbeitung eines Signals - hier ein Infrarotsignal eines Lasers - ist problematisch, dass auch bei variationsreicher Gestaltung von Spielarenen letztendlich nach häufigem Spielen früher oder später ein Gefühl der Langeweile beim Spieler aufkommt. Im Ergebnis entsteht der Wunsch nach immer variantenreicheren Spielsituationen und aufregenderen Erlebnissen mit möglichst vielseitiger Umgebungsdarstellung und besonders abwechslungsreichen Spielvariationen.

Der vorliegenden Erfindung liegt daher die Aufgabe zugrunde, eine Spielanordnung sowie ein Verfahren zur Verarbeitung eines Signals während eines Spiels der eingangs genannten Art derart auszugestalten und weiterzubilden, dass ein besonders variantenreiches und abwechslungsreiches Spielerlebnis für einen Spieler mit konstruktiv einfachen Mitteln erreichbar ist.

Erfindungsgemäß wird die voranstehende Aufgabe durch eine Spielanordnung mit den Merkmalen des Anspruchs 1 gelöst. Danach weist die Spielanordnung einen von einem Spieler während eines Spiels im Spielbereich mit sich zu führenden oder zu tragenden Sensor für akustische und/oder optische und/oder elektromagnetische Signale und eine dem Spieler zugeordnete Anzeige auf, wobei die Anzeige als Reaktion auf ein von dem Sensor empfangenes definierbares Signal zur Einblendung von Information in das Sichtfeld des Spielers in vorgebbarer Weise aktivierbar ist.

Des Weiteren wird die voranstehende Aufgabe erfindungsgemäß durch ein Verfahren zur Verarbeitung eines Signals während eines Spiels mit den Merkmalen des Anspruchs 12 gelöst. Bei dem Verfahren werden ein von einem Spieler während eines Spiels im Spielbereich mit sich zu führender oder zu tragender Sensor für akustische und/oder optische und/oder elektromagnetische Signale und eine dem Spieler zugeordnete Anzeige eingesetzt, wobei die Anzeige als Reaktion auf ein von dem Sensor empfangenes definierbares Signal zur Einblendung von Information in das Sichtfeld des Spielers in vorgebbarer Weise aktiviert wird.

In erfindungsgemäßer Weise ist zunächst erkannt worden, dass ein variantenreicheres und abwechslungsreicheres Spielerlebnis nicht nur durch eine weiter verbesserte und individualisierte Ausgestaltung des Spielbereichs erreicht werden kann. In weiter erfindungsgemäßer Weise ist hierzu erkannt worden, dass die Anzeige als Reaktion auf ein von dem Sensor empfangenes definierbares Signal derart aktivierbar ist, dass sie geeignete Information in das Sichtfeld des Spielers in vorgebbarer Weise einblendet. Derartige eingeblendete Information kann beispielsweise durch ein eingeblendetes zusätzliches Objekt oder durch eine eingeblendete Grafik gebildet sein, die den Spieler zu definierbaren Reaktionen antreiben. Hinsichtlich der Art derartiger eingeblendeter Information und Grafiken sind grundsätzlich keine Grenzen gesetzt, wodurch das Spielerlebnis auf besonders einfache und elegante Art und Weise erweitert und intensiviert werden kann. Sobald der dem Spieler zugeordnete Sensor das definierbare akustische und/oder optische und/oder elektromagnetische Signal empfängt, kann die Einblendung der Information durch die Anzeige erfolgen. Folglich sind mit der erfindungsgemäßen Spielanordnung und dem erfindungsgemäßen Verfahren ein besonders variantenreiches und abwechslungsreiches Spielerlebnis für einen Spieler mit konstruktiv einfachen Mitteln erreichbar.

Im Hinblick auf eine besonders große Vielfalt der Spielgestaltung kann das definierbare Signal ein Bildsignal eines Markers, einer definierbaren räumlichen Umgebung, eines definierbaren Ereignisses oder einer definierbaren Bewegung oder Aktivität einer Person oder eines Gegenstands sein. Das von dem Sensor empfangene definierbare Signal liegt in diesem Fall in Form eines Bildsignals vor, das beispielsweise von einem Marker herrühren kann. Derartige Marker können in vorteilhafter Weise an einzelnen Spielern oder auch an geeigneten Stellen des Spielbereichs angebracht werden, um geeignete Reaktionen bei der Anzeige hervorzurufen. Im Fall eines an einem Spieler oder an der Ausrüstung eines Spielers angebrachten Markers, kann über den Marker der jeweilige Spieler oder auch der Blickwinkel auf diesen bestimmt werden, beispielsweise vorne, hinten, links, rechts usw.. Innerhalb des Spielbereichs können die Marker zur Identifizierung unterschiedlicher Lokationen und/oder des Aufenthaltsorts und der Blickrichtung des Spielers dienen.

Das definierte Signal kann jedoch auch ein Bildsignal einer definierbaren räumlichen Umgebung sein, wobei mittels Bildverarbeitung die räumliche Umgebung erkannt werden kann. Des Weiteren kann das definierbare Signal ein Bildsignal eines definierbaren Ereignisses wie beispielsweise eine Veränderung der räumlichen Umgebung oder eine Veränderung der Helligkeit oder Farbe im Bereich der räumlichen Umgebung sein. Weiterhin kann das definierbare Signal ein Bildsignal einer definierbaren Bewegung oder Aktivität einer Person oder eines Gegenstands sein, beispielsweise das plötzliche Erscheinen einer Person in den Detektionsbereich des Sensors. Im Hinblick auf die Art des definierbaren Signals sind diesbezüglich keine Grenzen gesetzt.

Ein wie oben definierter Marker kann in vorteilhafter Weise durch seine Bildstruktur und/oder Farbe und/oder Größe definiert sein. Hierdurch lässt sich eine nahezu unbegrenzte Vielfalt an Markern gestalten, die jeweils ganz individuelle Einblendungen in das Sichtfeld des Spielers hervorrufen können.

Hinsichtlich einer weiteren Vergrößerung des weiten Felds an definierbaren Signalen kann das definierbare Signal ein akustisches Signal oder eine Tonfolge oder ein optisches Signal, insbesondere ein Infrarot- oder Lasersignal, umfassen. Das definierbare Signal kann somit beispielsweise durch ein plötzlich auftretendes Geräusch wie beispielsweise ein Bewegungsgeräusch eines anderen Spielers gebildet sein. Weiterhin kann das definierbare Signal in vorteilhafter Weise durch ein optisches Signal wie beispielsweise ein Infrarot- oder Lasersignal gebildet sein, dass beispielsweise von einem Infrarot- oder Lasersender eines Mitspielers oder Gegenspielers herrührt.

Nicht nur für den Fall eines derart erzeugten Infrarot- oder Lasersignals eines Mit- oder Gegenspielers kann der Spielbereich in weiter vorteilhafter Weise für ein Laserspiel oder Lasertag ausgebildet sein. Die erfindungsgemäße Spielanordnung und das erfindungsgemäße Verfahren zur Verarbeitung eines Signals während eines Spiels können in vorteilhafter Weise mit einem bekannten Laserspiel oder Lasertag kombiniert werden, um beispielsweise ein Lasertag-Spielerlebnis durch die Verwendung von Augmented Reality zu intensivieren und dadurch um weitere Facetten zu ergänzen.

Bei einem weiteren Ausführungsbeispiel kann die Anzeige zur Wiedergabe von Tönen und/oder zur Erzeugung von Vibrationen ausgebildet sein. Insoweit ist es zur Intensivierung eines Spielerlebnisses möglich, eine Reaktion auf ein von dem Sensor empfangenes definierbares Signal nicht nur in Form einer Einblendung von Information auszuführen, sondern zusätzlich eine Wiedergabe von Tönen und/oder Erzeugung von Vibrationen vorzunehmen. Derartige Töne können Stimmen oder Rufe von Personen oder auch Geräusche von Gegenständen wie beispielsweise Fahrzeugen sein. Vibrationen können beispielsweise Erschütterungen jedweder Art simulieren.

Eingeblendete Informationen können beispielswiese Punktzahlen, Trefferzahlen oder räumliche Informationen oder jegliche andere Arten von Informationen sein. Im Hinblick auf eine abwechslungsreiche und individuelle Spielgestaltung können die Art und/oder der Umfang einzublendender Information und/oder wiederzugebender Töne und/oder zu erzeugender Vibrationen wählbar sein. So kann ein Spieler die eingeblendete Information, wiederzugebende Töne oder zu erzeugende Vibrationen vor Spielbeginn oder auch während des Spiels auswählen. Ein anderer Spieler kann diesbezüglich eine andere Auswahl treffen.

Grundsätzlich kann die Anzeige von einem Spieler mit sich führbar oder tragbar ausgebildet sein. Dabei ist es im Hinblick auf die vorzunehmende Einblendung von Information in das Sichtfeld des Spielers von Vorteil, wenn die Anzeige am Kopf des Spielers getragen wird.

Im Hinblick auf eine besonders vielseitige Anzeige kann die Anzeige als Datenbrille ausgebildet sein. Solche Datenbrillen sind bereits im Handel erhältlich. Alternativ hierzu kann die Anzeige einen transparenten oder semi-transparenten, vorzugsweise im Blickfeld eines Spielers vom Spieler tragbaren Bildschirm aufweisen. Der Bildschirm könnte für einen Spieler durchsichtig sein, wobei die eingeblendete Information mit dem vom Spieler sichtbaren realen Spielbereich überlagert oder vermengt wird. Letztendlich kann hierdurch die Realität mit Virtuellem vermengt werden.

Im Hinblick auf eine besonders komfortable und einfache Ausgestaltung der Spielanordnung können der Sensor und die Anzeige beide in einer Einrichtung oder in einer Datenbrille realisiert sein. Hierdurch ist eine besonders kompakte Komponente bereitgestellt, die den Sensor und die Anzeige in einem Bauteil bereitstellt.

In weiter vorteilhafter Weise kann der Sensor mindestens eine Kamera und/oder mindestens ein Mikrofon und/oder mindestens einen Funkempfänger aufweisen. Insoweit kann der Sensor zum Empfang unterschiedlicher optischer, akustischer oder elektromagnetischer Signale ausgebildet sein. Dies bildet die Grundlage für ein besonders variantenreiches und abwechslungsreiches Spielerlebnis für einen Spieler.

Mit der erfindungsgemäßen Spielanordnung und dem erfindungsgemäßen Verfahren zur Verarbeitung eines Signals während eines Spiels können bisher bekannte Erlebniswelten erweitert werden, wobei quasi virtuelle Information mit der von einem Spieler wahrgenommenen Realität überlagert werden kann. Man kann hier von einer Virtual Reality sprechen, die in die reale Welt eingeblendet wird. Diese Einblendung kann markerbasiert erfolgen, wobei ein Sensor auf beliebige optische, akustische oder elektromagnetische Marker oder Signale empfindlich sein kann, um eine Reaktion in Form der Einblendung von Information in das Sichtfeld des Spielers auszulösen. Diese Überlagerung oder Vermengung wird mit anderen Worten durch irgendein Ereignis in Form eines definierbaren Signals getriggert. Hierdurch wird eine Interaktion zwischen Sensor und Anzeige ausgelöst.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel einer erfindungsgemäßen Spielanordnung und
- Fig. 2: Beispiele für optische Marker für eine Spielanordnung gemäß Fig. 1.

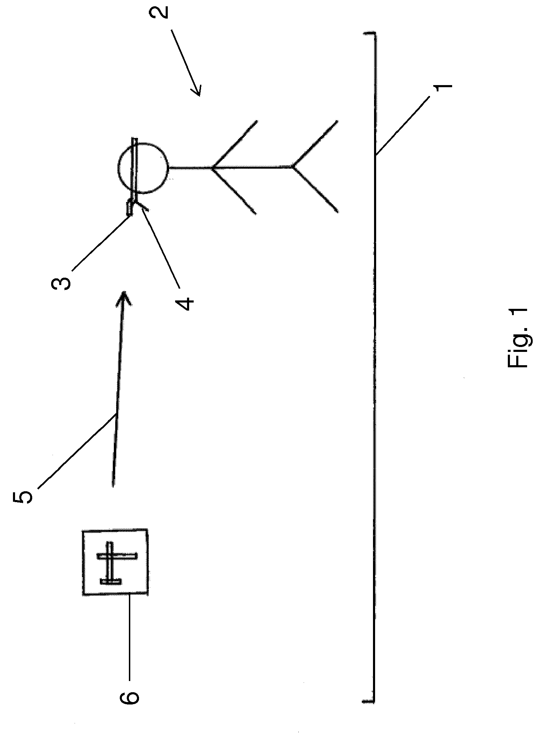

Fig. 1 zeigt in einer schematischen Darstellung ein Ausführungsbeispiel einer erfindungsgemäßen Spielanordnung mit einem abgegrenzten Spielbereich 1 für einen Spieler 2. Der abgegrenzte Spielbereich 1 kann in einem Gebäude oder auch im Freien realisiert sein. Der Spieler 2 trägt einen Sensor 3 für optische Signale in Form einer Kamera. Dem Spieler 2 ist des Weiteren eine Anzeige 4 zugeordnet, die gemeinsam mit dem Sensor 3 in einer Einrichtung realisiert ist, die vom Spieler 2 am Kopf getragen wird. Die Einrichtung kann beispielsweise eine Datenbrille sein.

Im Hinblick auf die Realisierung eines besonders variantenreichen und abwechslungsreichen Spielerlebnisses für einen Spieler ist die Anzeige 4 als Reaktion auf ein von dem Sensor 3 empfangenes definierbares Signal 5 zur Einblendung von Information in das Sichtfeld des Spielers 2 in vorgebbarer Weise aktivierbar. Sobald der Sensor 3 das definierbare Signal 5 empfängt, blendet die Anzeige 4 als Reaktion beliebig vorgebbare Information in das Sichtfeld des Spielers 2 ein. Die Information könnte eine Grafik oder auch Spielstände umfassen.

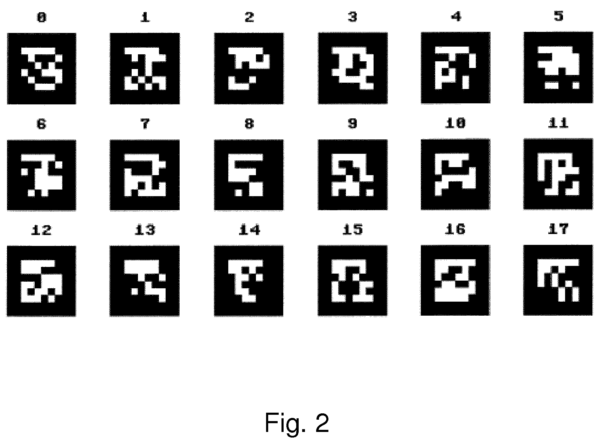

Das definierbare Signal 5 ist ein Bildsignal eines Markers 6, der an geeigneter Stelle im Spielbereich 1 angeordnet ist. Der Marker 6 ist durch seine Bildstruktur definiert. Geeignete Beispiele für optische Marker sind in Fig. 2 dargestellt.

Der Spielbereich 1 kann ein Spielbereich 1 für ein Laserspiel oder Lasertag sein. Ein Lasertag-Spielerlebnis kann durch die Verwendung von Augmented Reality intensiviert und um weitere Facetten ergänzt werden. Eine intensivere und reichere Spielerfahrung wird einem Spieler hierdurch ermöglicht. Zu diesem Zweck kann der Spieler bei einem Ausführungsbeispiel eine durchsichtige Datenbrille tragen, die es ermöglicht, zusätzliche Information oder zusätzliche Grafik innerhalb des natürlichen Sichtfelds des Spielers 2 einzublenden. Bestandteil dieser Datenbrille ist eine Kamera/Sensor 3, die/der das Sichtfeld des Spielers 2 überwacht. Des Weiteren können sowohl der Spieler 2 als auch mehrere Spieler 2 als auch der Spielbereich 1 mit Markern 6 versehen werden, die von der Kamera/dem Sensor 3 erkannt werden können. Der Sensor 3 kann auf optische Signale, beispielsweise Infrarotsignale, empfindlich sein. Marker 6 auf der Ausrüstung eines Spielers 2 erlauben es, sowohl den jeweiligen Spieler 2 als auch den Blickwinkel auf diesen zu bestimmen, beispielsweise von vorne, von hinten, von links, von rechts usw.. Innerhalb des Spielbereichs 1 können die Marker 6 zur Identifizierung verschiedener Lokationen oder des Aufenthaltsorts und der Blickrichtung des Spielers 2 dienen.

Die erfindungsgemäße Spielanordnung und Ausrüstung des Spielers 2 und des Spielbereichs 1 erlauben es nun, dem Spieler 2 während eines Spiels interaktiv und in Echtzeit Informationen und Grafiken zu präsentieren, um das Spielerlebnis zu erweitern und zu intensivieren. Die Art der angezeigten Information ist vom Spieler 2 wählbar, um seinen Bedürfnissen gerecht zu werden.

Die einzublendende Information kann die folgenden Varianten umfassen:
- Im unteren Rand oder in einem anderen Bereich einer Datenbrille kann der Spieler 2 Daten zu seinem laufenden Spiel sehen, beispielsweise aktuelle Punktzahl, Anzahl seiner Treffer, Lebenspunkte etc.
- Es kann ein Radarschirm mit der Position anderer Teammitglieder eingeblendet werden.
- Wenn sich der Spieler 2 an einer bestimmten Stelle im Spielbereich 1, beispielsweise in einem Labyrinth, befindet, kann ein schwebendes Objekt eingeblendet werden. Dieses Objekt kann der Spieler 2 aufsammeln - etwa durch einfaches Durchlaufen - und so weitere Möglichkeiten - Dauerfeuer, Röntgenblick etc. - oder Eigenschaften - Rüstung, Unsichtbarkeit etc. - erhalten.
- Je nach Spielmodus lassen sich auf markierte Oberflächen des Spielbereichs 1 unterschiedliche Texturen einblenden, etwa um eroberte Gebiete in den Farben des jeweiligen Teams zu markieren oder um unterschiedliche Stimmungen zu erzeugen, beispielsweise Felsen, Raumschiff, Stadt etc.
- Bei der Betrachtung eines anderen Spielers 2 kann der Spieler 2 Informationen über diesen erhalten. Diese Informationen können umfassen: den Namen, aktuelle Punkte, die Anzeige "sichtbarer" Eigenschaften wie eine aktivierte Rüstung.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung dieser beanspruchten Lehre dienen, diese jedoch nicht auf die Ausführungsbeispiele einschränken.

### Bezugszeichenliste

- 1: Spielbereich
- 2: Spieler
- 3: Sensor
- 4: Anzeige
- 5: Signal
- 6: Marker

## Patentansprüche

1. Spielanordnung
mit einem vorzugsweise abgegrenzten Spielbereich (1) für einen oder mehrere Spieler (2),
mit einem von einem Spieler (2) während eines Spiels im Spielbereich (1) mit sich zu führenden oder zu tragenden Sensor (3) für akustische und/oder optische und/oder elektromagnetische Signale,
und mit einer dem Spieler (2) zugeordneten Anzeige (4),
wobei die Anzeige (4) als Reaktion auf ein von dem Sensor (3) empfangenes definierbares Signal (5) zur Einblendung von Information in das Sichtfeld des Spielers (2) in vorgebbarer Weise aktivierbar ist.

2. Spielanordnung nach Anspruch 1, **dadurch gekennzeichnet, dass** das definierbare Signal (5) ein Bildsignal eines Markers (6), einer definierbaren räumlichen Umgebung, eines definierbaren Ereignisses oder einer definierbaren Bewegung oder Aktivität einer Person oder eines Gegenstands ist.

3. Spielanordnung nach Anspruch 2, **dadurch gekennzeichnet, dass** der Marker (6) durch seine Bildstruktur und/oder Farbe und/oder Größe definiert ist.

4. Spielanordnung nach einem der Ansprüche 1 bis 3, **dadurch gekennzeichnet, dass** das definierbare Signal (5) ein akustisches Signal oder eine Tonfolge oder ein optisches Signal, insbesondere ein Infrarot- oder Lasersignal, umfasst.

5. Spielanordnung nach einem der Ansprüche 1 bis 4, **dadurch gekennzeichnet, dass** der Spielbereich (1) für ein Laserspiel oder Lasertag ausgebildet ist.

6. Spielanordnung nach einem der Ansprüche 1 bis 5, **dadurch gekennzeichnet, dass** die Anzeige (4) zur Wiedergabe von Tönen und/oder zur Erzeugung von Vibrationen ausgebildet ist.

7. Spielanordnung nach einem der Ansprüche 1 bis 6, **dadurch gekennzeichnet, dass** die Art und/oder der Umfang einzublendender Information und/oder wiederzugebender Töne und/oder zu erzeugender Vibrationen wählbar ist.

8. Spielanordnung nach einem der Ansprüche 1 bis 7, **dadurch gekennzeichnet, dass** die Anzeige (4) von einem Spieler (2) mit sich führbar oder tragbar ist.

9. Spielanordnung nach einem der Ansprüche 1 bis 8, **dadurch gekennzeichnet, dass** die Anzeige (4) als Datenbrille ausgebildet ist oder einen transparenten oder semi-transparenten, vorzugsweise im Blickfeld eines Spielers (2) vom Spieler (2) tragbaren Bildschirm aufweist.

10. Spielanordnung nach einem der Ansprüche 1 bis 9, **dadurch gekennzeichnet, dass** der Sensor (3) und die Anzeige (4) beide in einer Einrichtung oder in einer Datenbrille realisiert sind.

11. Spielanordnung nach einem der Ansprüche 1 bis 10, **dadurch gekennzeichnet, dass** der Sensor (3) mindestens eine Kamera und/oder mindestens ein Mikrofon und/oder mindestens einen Funkempfänger aufweist.

12. Verfahren zur Verarbeitung eines Signals (5) während eines Spiels, insbesondere mit einer Spielanordnung nach einem der Ansprüche 1 bis 11,
mit einem vorzugsweise abgegrenzten Spielbereich (1) für einen oder mehrere Spieler (2),
mit einem von einem Spieler (2) während eines Spiels im Spielbereich (1) mit sich zu führenden oder zu tragenden Sensor (3) für akustische und/oder optische und/oder elektromagnetische Signale,
und mit einer dem Spieler (2) zugeordneten Anzeige (4),
wobei die Anzeige (4) als Reaktion auf ein von dem Sensor (3) empfangenes definierbares Signal (5) zur Einblendung von Information in das Sichtfeld des Spielers (2) in vorgebbarer Weise aktiviert wird.
